# EUROPÄISCHE PATENTSCHRIFT

(11) **EP 1 475 253 B1**
(45) Veröffentlichungstag und Bekanntmachung des Hinweises auf die Patenterteilung: **23.04.2008**
(21) Anmeldenummer: 04006028.7
(22) Anmeldetag: 13.03.2004
(51) Int. Cl.: B60D 1/54, B60D 1/26

(54) **Anhängekupplung für Kraftfahrzeuge**
Trailer coupling for motor vehicles
Attelage de remorque pour véhicules automobiles

(30) Priorität: 07.05.2003 DE 10320302
(43) Veröffentlichungstag der Anmeldung: 10.11.2004
(73) Patentinhaber: WESTFALIA - Automotive GmbH, 33378 Rheda-Wiedenbrück (DE)
(72) Erfinder: Domke, Friedrich, 33442 Herzebrock-Clarholz (DE); Hermbusch, Gerhard, 33449 Langenberg (DE); Wyrwich, Martin, 33378 Rheda-Wiedenbrück (DE)
(74) Vertreter: Grosse, Wolf-Dietrich Rüdiger

(56) Entgegenhaltungen:
- EP-A- 1 024 036
- EP-A- 1 142 732
- EP-A- 1 182 062
- EP-A- 1 288 026
- WO-A-97/04972
- DE-A- 10 032 002
- DE-A- 19 701 273
- DE-A- 19 858 978

## Beschreibung

Die Erfindung betrifft eine Anhängekupplung für Kraftfahrzeuge, umfassend eine fahrzeugfest angeordnete, schwenkbar sowie axial verschieblich gelagerte Kugelstange, die an ihrem freien Ende eine Kupplungskugel trägt und sowohl in ihrer Ruhelage als auch in ihrer Betriebslage über in Eingriff bringbare Formschlußkonturen einerseits eines Kugelstangenlagerkopfes und andererseits eines diesem gegenüberliegenden Anbauflansches drehfest festlegbar ist, wobei der Kugelstangenlagerkopf mit einer Verriegelung für die Formschlußkonturen sowohl in der Betriebslage als auch in der Ruhelage der Kugelstange ausgebildet ist.

Eine Anhängekupplung dieser Art ist durch die DE 198 59 961 A1 bekanntgeworden. Die Kugelstange, bestehend aus Kugelhals und Kupplungskugel sowie Lagerhülse bzw. Kugelstangenlagerkopf, wird sowohl in der Ruhelage, in welcher sich die Kugelstange in etwa quer zur Fahrzeuglängsrichtung unter dem Stoßfänger befindet, als auch in der Betriebslage, in welcher sich die Kugelstange im wesentlichen in Fahrzeuglängsrichtung befindet, mittels der Formschlußverbindungen drehfest festgelegt. Die Formschlußverbindungen in Form einer Verzahnung sowie einer Gegenverzahnung greifen in den Drehendstellungen des Kugelstangenlagerkopfes ineinander.

Zum Festlegen und Freigeben dieser bekannten Kugelstange dient ein verstellbares, die Lagerhülse bzw. den Kugelstangenlagerkopf abstützendes Widerlager, das wie der Kugelstangenlagerkopf auf einem Lagerbolzen angeordnet ist, der über einen Befestigungsansatz bzw. Anbauflansch an einem mit dem Fahrzeug verbundenen Querrohr befestigt ist. In der einen Axialstellung des die Lagerhülse abstützenden Widerlagers stehen die Formschlußkonturen von Lagerbolzen und Lagerhülse so miteinander in Eingriff, daß die Lagerhülse und damit die Kugelstange gegenüber dem Fahrzeug nicht verdreht werden kann. In der zweiten Axialstellung, in der das Widerlager dann von dem Anbauflansch bzw. Befestigungsansatz entfernt ist, kann die Lagerhülse so weit von dem Anbauflansch des Lagerbolzens abgerückt werden, daß die Formschlußkonturen außer Eingriff kommen und danach die Lagerhülse samt daran angeordneter Kugelstange zwischen der Ruhe- und der Betriebslage verschwenkt werden kann. Die jeweilige Verriegelungsposition wird danach von Hand durch eine erneute Axialverschiebung des Widerlagers erreicht.

Aus der EP 1 182 062 A2 ist eine Anhängerkupplung für Kraftfahrzeuge bekannt, umfassend ein fahrzeugfest angeordnetes Lagerteil und ein am Lagerteil gelagertes Schwenkteil mit einem Kugelhals und mit einer Kupplungskugel, welches gegenüber dem Lagerteil um eine Achse zwischen einer Ruhestellung und einer Arbeitsstellung verschwenkbar ist. Zum Fixieren des Kugelhalses in der Arbeitsstellung ist ein Verspannen von Anschlagelementen und von Stützelementen des Schwenkteils und des Lagerteils miteinander durch ein Verspanngetriebe vorgesehen, mit welchem mindestens eines der Stützelemente oder mindestens eines der Anschlagelemente von einer Lösestellung in eine Spannstellung und umgekehrt bewegbar ist. Das Vorspanngetriebe ist als selbsthemmendes Keilgetriebe ausgebildet.

Der Erfindung liegt die Aufgabe zugrunde, eine gattungsgemäße Anhängekupplung zu schaffen, die ein einfaches sowie sicheres Verstellen und Festlegen der Kugelstange in den Drehendstellungen ermöglicht.

Diese Aufgabe wird erfindunggemäß dadurch gelöst, daß die Verriegelung einen gegen ein anstehendes Kraftelement über ein von außen betätigbares Druck- oder Zugmittel zurückstellbaren Sperrbolzen umfaßt, dem in zwei parallel voneinander vorgesehenen Radialebenen gegenläufig wirkende Rastmittel zugeordnet sind. Hierbei läßt sich mit ausschließlich der hinteren, dem Anbauflansch zugewandten Ebene in den Drehendlagen der Kugelstange deren Verriegelung erreichen, weil die Rastmittel den Kugelstangenlagerkopf in diese Ebene hineinziehen. Hingegen sind die Rastmittel der vorderen Radialebene in diesem Betriebszustand für die Verriegelung der Formschlußkonturen unwirksam. Beim Auslösen zum Verschwenken des Kugelstangenlagerkopfes unterstützen dann aber die Rastmittel der vorderen Radialebene das Abdrücken des Kugelstangenlagerkopfes aus seiner Formschlußverbindung mit dem Anbauflansch, weil die Rastmittel der vorderen Radialebene den Kugelstangenlagerkopf zusätzlich definiert in Löserichtung wegdrücken. Diese unterstützende Beaufschlagung des Kugelstangenlagerkopfes in Löserichtung gewährleistet, daß ein Ausrücken der Kugelstange auch bei tiefen Temperaturen oder bei Verschmutzung der Anhängekupplung, zumal wenn diese lange nicht benutzt und betätigt worden ist, mit dann möglicherweise in ihren Sitzen verbackenen Rastmitteln, möglich ist.

Eine bevorzugte Ausführung der Erfindung sieht vor, daß der Kugelstangenlagerkopf auf einer Hohlwelle angeordnet ist, die den Sperrbolzen zentral aufnimmt. Durch die Abkehr von einer auf einem Lagerbolzen bzw. einer durchgängigen Lagerachse gelagerten Kugelstange, die somit vielmehr auf einer Hohlwelle mit zentral integrierter Verriegelung angeordnet ist, läßt sich ein in sich geschlossenes, weitestgehend wartungsfreies System erreichen. Die erreichte axial wirkende Verriegelung im Zusammenspiel mit den Zwei-Ebenen-Rastmitteln führt zu einer gleichzeitigen, selbsttätigen axialen Zwangsverschiebung der Kugelstange, sobald die Sperrung in einer Drehendlage aufgehoben wird.

Die Rastmittel sind in vorteilhafter Ausführung als Kugeln ausgebildet und in Radialbohrungen der Hohlwelle begrenzt ein- und ausrückbar angeordnet. In der Verriegelungsposition, die vorteilhaft durch eine selbsthemmende Schräge und/oder einen Hinterschnitt des Sperrbolzens zusätzlich gesichert werden kann, drückt der Sperrbolzen die Kugeln der hinteren Ebene in den Radialbohrungen nach außen, womit eine weitere axiale Verstellung der Kugelstange verhindert wird, während die Kugeln der vorderen Ebene sich in einer unwirksamen, nach innen gefallenen Position befinden. Zu diesem Zweck ist vorteilhaft das vordere Ende des Sperrbolzens mit einem Einschnürungsabschnitt ausgebildet, der beidendig mit Schrägflächen einerseits in den rückwärtigen Sperrbolzenkörper und andererseits den Sperrbolzenkopf übergeht. In dieser Ausführung schafft die Durchmesserverringerung des Sperrbolzens aufgrund des Einschnürungsabschnitts den erforderlichen Freiraum, damit in dieser Position die Rastkugeln der vorderen Ebene nach innen fallen können.

Wenn dann das Kaftelement, z. B. eine Druckfeder, vorgespannt bzw. zusammengezogen wird, beispielsweise mittels eines Handrades, wie aus der DE-U 94 08 478.5 bekannt, über das eine Zahnstange einen Bowdenzug als Verbindung zum Sperrbolzen betätigt, so daß der Sperrbolzen zurückgezogen wird, fallen die zuvor auseinandergedrückten Kugeln der hinteren Ebene nach innen, wobei auch hier der Einschnürungsabschnitt wiederum den notwendigen Freiraum schafft, während die Kugeln der vorderen Ebene von dem Sperrbolzen nunmehr nach außen bewegt werden und mit der ihnen in Löserichtung aufgezwungenen Kraftkomponente das Abdrücken der Kugelstange unterstützen.

Die durch das Zurückziehen des Sperrbolzens aus ihrer Formschlußverbindung vom Anbauflansch freigekommene Kugelstange bzw. der Kugelstangenlagerkopf kann somit nach dem Entriegeln unter der Schwerkraft bei gleichzeitiger axialer Verschiebung in eine Zwischenposition schwenken. Aus der heraus läßt sich die Kugelstange manuell oder motorbetrieben in die gewünschte, jeweils durch einen äußeren Anschlag gesicherte Drehendlage verschwenken und verriegeln, wozu dem Kraftelement die Entspannung ermöglicht wird, so daß der Sperrbolzen vorrücken und die Rastkugeln der hinteren Radialebene umgekehrt zum vorbeschriebenen Ablauf wieder nach außen in ihre Einrastposition drücken kann, während die Rastkugeln der vorderen Ebene wieder nach innen fallen. Alternativ zur mechanischen Handrad-Auslösung ist z.B. auch ein motorischer Auslöseantrieb oder der Einsatz von Elektro- bzw. Hubmagneten möglich, deren axiale Bewegung ein weiterer Hubmagnet als Sicherung sperren kann. Bei einer Betätigung einer solchen Ausführung wird über eine Steuerung zunächst der Sicherungshubmagnet und anschließend der Hauptmagnet gelöst.

Nach einer Ausgestaltung der Erfindung sind den Kugeln im Kugelstangenlagerkopf mit in den beiden Radialebenen gegenläufig ausgerichteten Anlaufschrägen ausgebildete Aufnahmen, z.B. eine Ringnut oder Rille, die sich vorteilhaft in einen im Kugelstangenlagerkopf befestigten Lagerring vorsehen lassen, zugeordnet. Die zum Anbauflansch ausgerichtete Anlaufschräge der Kugeln der hinteren Radialebene begünstigt beim Verriegelungsvorgang das automatische Anziehen des Kugelstangenlagerkopfes in die Formschlußverbindung mit dem Anbauflansch, während umgekehrt die Anlaufschräge der Aufnahme der Kugeln der vorderen Radialebene das Abdrücken unterstützt.

Erfindungsgemäß wird vorgeschlagen, daß zur Formschlußverbindung von Kugelstangenlagerkopf und Anbauflansch in deren einander gegenüberliegenden Stirnflächen auf gleichen Teilkreisen gleichmäßig verteilt einerseits Kugeln und andererseits Kalotten ausgebildet sind. Alternativ eignen sich Verzahnungen oder dergleichen Rastmittel, die in den Drehendlagen ineinandergreifen.

Nach einem Vorschlag der Erfindung ist zwischen dem von dem Anbauflansch entfernten Ende der Hohlwelle und einem dort vorgesehenen Verbindungsblech eine Ausgleichsscheibe angeordnet. Die Ausgleichsscheibe ermöglicht eine Anpassung bei der Montage der Kugelstange. Sowohl der Anbauflansch als auch das Verbindungsblech, beides zur Befestigung der Anhängekupplung an einen Querträger des Kraftfahrzeuges geeignet, können als einfache Laser- oder Stanzteile hergestellt werden. Wenn die Kugelstange im einfachsten Fall ohne das Verbindungsblech und nur über den Anbauflansch mit dem Querträger verbunden ist, läßt sich die Hohlwelle mit einem Stopfen bzw. einer Kappe verschließen; eine Ausgleichsscheibe ist bei dieser Bauweise nicht erforderlich.

Anbauvarianten der Erfindung sehen vor, daß das Verbindungsblech und/oder der Anbauflansch an einem Mittelteil eines mehrteiligen Querträgers oder außermittig am Querträger befestigt ist bzw. sind. Trotz einer außermittigen Anbringung der Kugelstange befindet sich die Kupplungskugel in der Betriebslage mittig zur Fahrzeuglängsrichtung.

Der Kugelstange läßt sich weiterbildungsgemäß ein deren Schwenkbewegungen mitmachender Steckdosenhalter zuordnen. Dieser kann sich direkt am Kugelhals oder am Kugelstangenlagerkopf selbst bzw. wahlweise rechts oder links davon befinden. Ein zur Stromversorgung für einen vorteilhaften motorischen Dreh- und Schwenkantrieb der Kugelstange dienender, nicht unmittelbar an der Kugelstange vorgesehener Steckdosenhalter kann hierbei bei der Schwenkbewegung durch entsprechend angebrachte Mitnehmernocken von seiner Ruheposition in die Betriebsposition gebracht werden. Das Zurückholen kann über eine Feder erfolgen.

Wenn zumindest einige Bauteile der Anhängekupplung erfindungsgemäß aus Leichtmetall gefertigt sind, z.B. aus Aluminium oder dergleichen bestehen, läßt sich eine Gewichtsreduzierung erreichen.

Weiterhin wird vorgeschlagen, daß mechanisch stark belastete und beanspruchte Bereiche der Kupplungsbauteile, z.B. der Kugelstangenlagerkopf und/oder die Kalotten und/oder die Kupplungskugel, bzw. der Lagerring, die Radialbohrungen oder der Sperrbolzen, gehärtet oder zumindest bereichsweise mit einer härteren Schicht versehen sind, wie vor allem beim Einsatz von Leichtmetall-Bauteilen.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: in einer perspektivischen Gesamtansicht eine Anhängekupplung, umfassend einen Anbauflansch und ein Verbindungsblech, mit in ihrer Betriebslage verriegelter, sich mittig in Längsrichtung eines nicht dargestellten Fahrzeugs erstreckender Kugelstange, angeschlossen an einen Handrad-Auslösemechanismus;
- Fig. 2: die Anhängekupplung nach Fig. 1 in vergrößerter perspektivischer Darstellung mit in ihrer Ruhelage verriegelter Kugelstange, in der sich diese unter einem Stoßfänger des nicht gezeigten Kraftfahrzeugs befindet;
- Fig. 3: die Anhängekupplung nach Fig. 2, allerdings in einer Ausführung ohne ein vorne angeordnetes Verbindungsblech, in einem Längsschnitt mit versetzter Schnittebene, in der Verriegelungsposition dargestellt;
- Fig. 4: die Anhängekupplung nach Fig. 3 in einer Position zum Auslöse- bzw. Abdrückvorgang dargestellt; und
- Fig. 5: die Anhängekupplung nach Fig. 3 bzw. Fig. 4 mit axial verschobenem Kugelstangenlagerkopf der Kugelstange und damit freier Bewegungsposition.

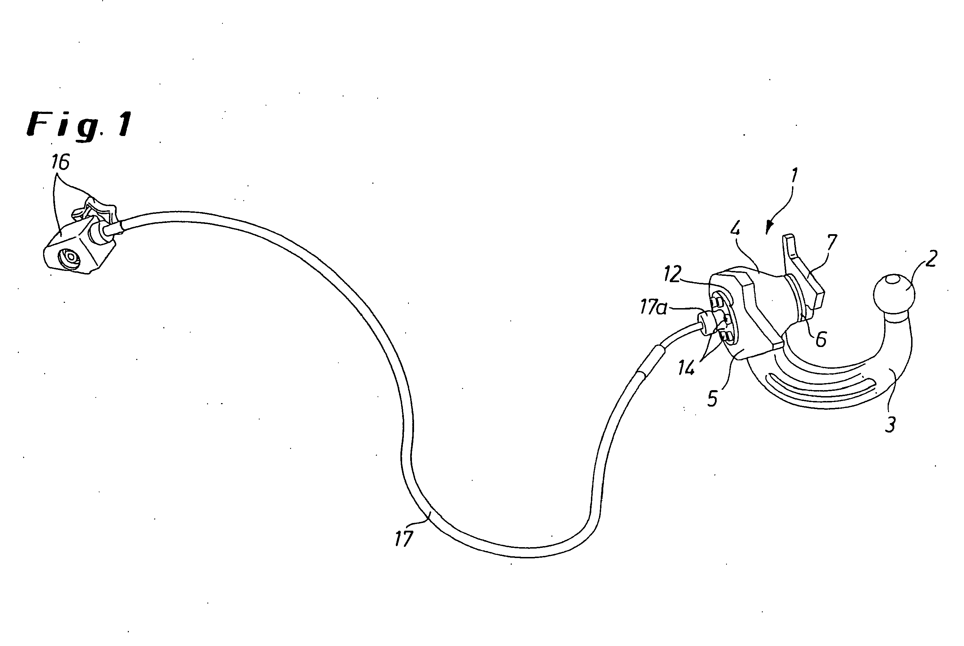

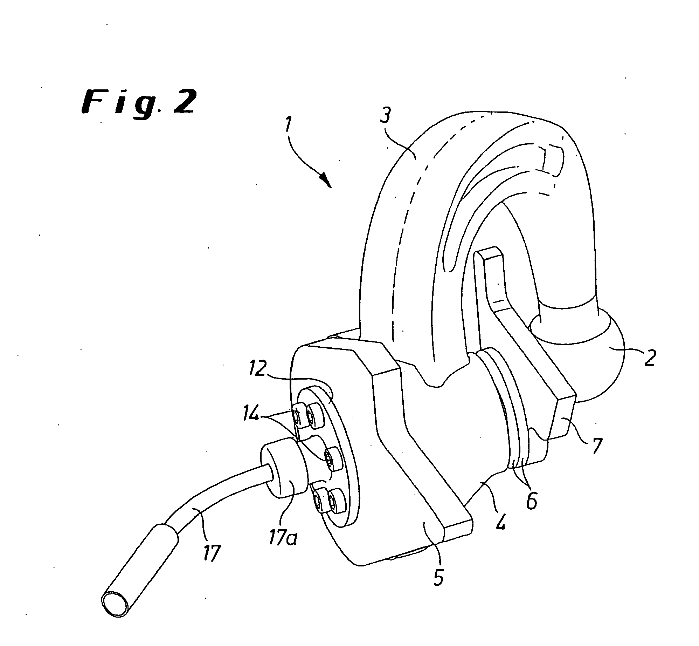

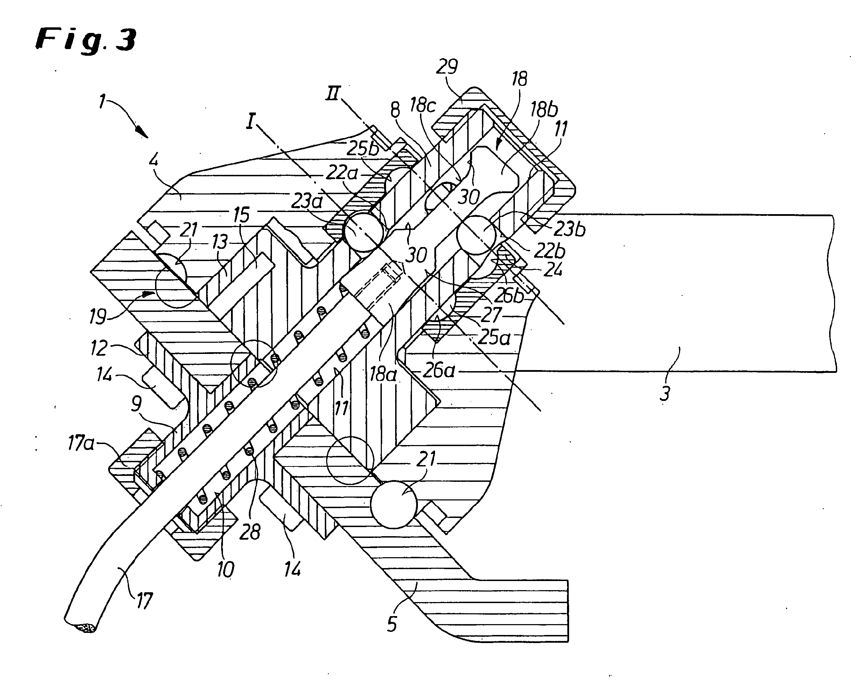

Eine in den Fig. 1 und 2 gezeigte Anhängekupplung ist über einen ein- oder mehrteiligen Querträger an einem Fahrzeug befestigt (nicht dargestellt). Die Anhängekupplung umfaßt eine gekröpfte, an ihrem freien Ende eine Kupplungskugel 2 tragende Kugelstange 3, die mit ihrem Kugelstangenlagerkopf 4 zwischen einem Anbauflansch 5 und in diesem Ausführungsbeispiel einem unter Zwischenschaltung einer Ausgleichsscheibe 6 gegenüberliegenden Verbindungsblech 7 angeordnet ist. Die Halterung des Kugelstangenlagerkopfes 4 erfolgt mittels einer Hohlwelle 8 (vgl. die Fig. 3 bis 5), auf der die Kugelstange mit ihrem Kugelstangenlagerkopf 4 gelagert ist.

Von der Außenseite des Anbauflansches her ist eine Montagebuchse 9 aufgesetzt, deren Endteil nabenartig und mit einer Bohrung 10 in Flucht mit der zentrischen Bohrung 11 der Hohlwelle 8 sowie einer Durchgangsbohrung des Anbauflansches 5 verlaufend angeordnet ist. Die Montagebuchse 9 könnte alternativ auch einstück mit der Hohlwelle 8 ausgebildet sein, z. B. nur als Nabenverlängerung des Kragens 13 der Hohlwelle 8. Die Bohrung des Anbauflansches 5 wird von einem Flansch 12 der Montagebuchse 9 überkragt. Durch den Flansch 12 in einen Kragen 13 der Hohlwelle 8 eingeschraubte Befestigungsschrauben 14 sorgen für die exakte Positionierung der Hohlwelle 8, was außerdem noch durch Zentrierstifte 15 unterstützt wird, und verhindern gleichzeitig Verschiebungen der Hohlwelle 8. Die Anhängekupplung wird mit ihrem Anbauflansch 5 an einem ein- oder mehrteiligen Querträger befestigt, der mit einem nicht dargestellten Kraftfahrzeug verbunden ist.

Die Fig. 1 zeigt die in die Betriebslage und die Fig. 2 die in die Ruhelage verschwenkte Kugelstange 3 der Anhängekupplung 1. In diesen Drehendlagen ist die Kugelstange 3 drehfest verriegelt (wird nachfolgend noch beschrieben werden). Zum Entriegeln und damit Freigeben der Schwenkbewegung der Kugelstange 3 ist im Ausführungsbeispiel von der Seite des Anbauflansches her an die Anhängekupplung 1 ein Handrad-Auslösemechanismus 16 über einen mit einer Schraubmuffe 17a auf die Nabe der Montagebuchse 9 verschraubten Bowdenzug 17 angeschlossen, der an seinem in den Kugelstangenlagenkopf 4 eintauchenden Ende mit einem in der Hohlwelle 8 vor- und zurückbewegbaren Sperrbolzen 18 (vgl. die Fig. 3 bis 5) verbunden ist.

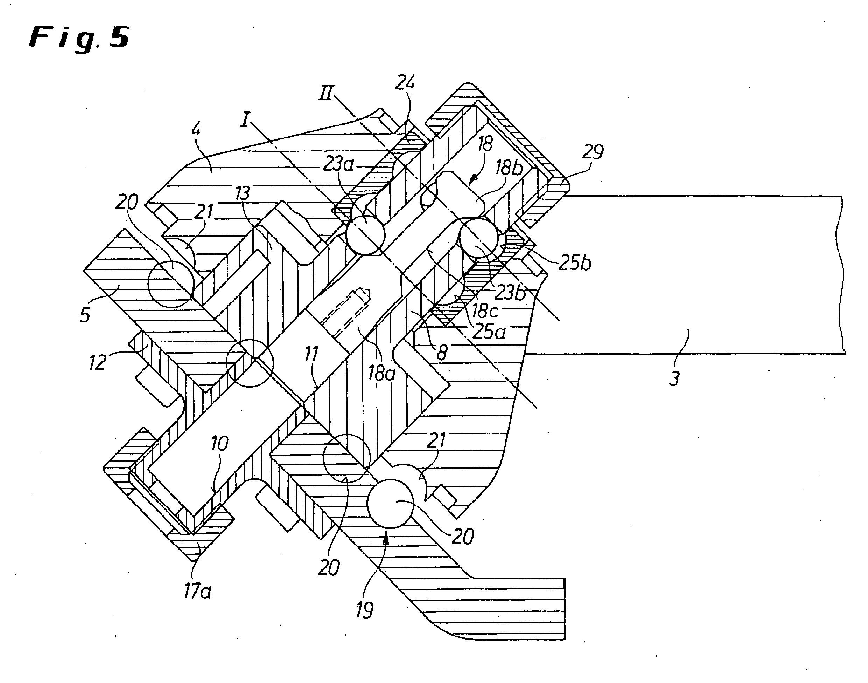

Wie sich der Fig. 3 entnehmen läßt, ist in den Drehendlagen (Betriebs- oder Ruhelage) die Kugelstange 3 über eine Formschlußverbindung 19, die hier aus in dem Anbauflansch 5 angeordneten Kugeln 20 und diesen in der Stirnfläche des Kugelstangenlagerkopfes 4 gegenüberliegend zugeordneten Kalotten 21 besteht (vgl. die Fig. 5), drehfest festgelegt. Zur Verriegelung dieser Drehendlagen sind für den Sperrbolzen 18 in einer hinteren Radialebene I in Radialbohrungen 22a, diese sind in Fig. 3 wegen der versetzten Schnittebene nur teilweise zu erkennen, der Hohlwelle 8 mehrere Rastmittel in Form von Kugeln 23a vorgesehen, die von dem rückwärtigen Sperrbolzenkörper 18a nach außen gedrückt werden und dabei in eine ihnen in einem Lagerring 24 des Kugelstangenlagerkopfes 4 zugeordnete Aufnahme 25a, ausgebildet beispielsweise als Ringnut oder Rille, bewegt werden.

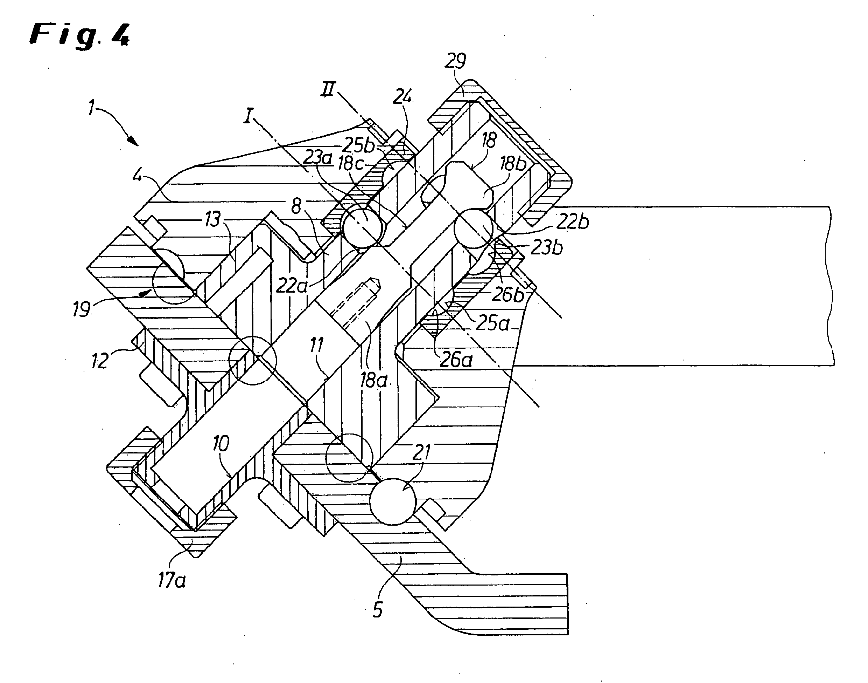

Die Aufnahme 25a ist an ihrer zu dem Anbauflansch 5 hin gerichteten Lauffläche mit einer Anlaufschräge 26a versehen (vgl. auch die Fig. 4 und 5), die in der in den Drehendlagen verriegelten Position der Kugelstange 3 eine gezielt ausgerichtete Kraft zur axialen Verschiebung der Kugelstange 3 bzw. des Kugelstangenlagerkopfes 4 in Richtung auf den Anbauflansch 5 bewirkt.

Der Sperrbolzen 18, der an seinem die Kugeln 23a durch die Radialbohrungen 22b in die Aufnahme 25a des Lagerringes 24 drückenden Umfang seines rückwärtigen Sperrbolzenkörpers 18a mit einer selbsthemmenden Schräge 27 und/oder einem Hinterschnitt ausgebildet ist, wird in diese Sperrlage durch ein Kraftelement in Form einer Druckfeder 28 bewegt, die hinter dem Sperrbolzen in den Bohrungen 11 bzw. 10 von Hohlwelle 8, Anbauflansch 5 und Montagebuchse 9 angeordnet ist. Dem Sperrbolzen 18 sind in einer zweiten, vorderen Radialebene II in Radialbohrungen 22b der Hohlwelle 8 umfangsverteilt weitere Rastmittel in Form von Kugeln 23b und einer Aufnahme 25b, ausgebildet beispielsweise wiederum als Ringnut oder Rille, zugeordnet. Diese vordere Aufnahme 25b ist mit einer Anlaufschräge 26b ausgebildet, die eine gezielt gegenläufig zur Anlaufschräge 26a der vorderen Radialebene I ausgerichtete Kraft, nämlich weg vom Anbauflansch 5 bewirkt. Nach vorne hin ist die Anhängekupplung 1 im übrigen durch eine auf das freie Ende der Hohlwelle 8 aufgeschraubte Kappe 29 verschlossen.

In der in Fig. 3 gezeigten Verriegelungsposition der Anhängekupplung 1 sind die Kugeln 23b der vorderen Radialebene II unwirksam; sie sind aus ihrer Aufnahme 25b herausgetreten und in ihren Radialbohrungen 22b nach innen gefallen. Um diesen Freiraum zu schaffen, ist das vordere Ende des Sperrbolzens 18 zwischen seinem rückwärtigen Sperrbolzenkörper 18a und seinem Sperrbolzenkopf 18b mit einem Einschnürungsabschnitt 18c hundeknochenartig ausgebildet. Der somit einen geringeren Durchmesser aufweisende Einschnürungsabschnitt 18c geht mit Schrägflächen 30 sowohl in den rückwärtigen Sperrbolzenkörper 18a als auch den Sperrbolzenkopf 18b über.

Zur Auslösung - wie in Fig. 4 gezeigt - und damit zum Entriegeln einerseits des Sperrbolzens und andererseits der Formschlußkonturen (Kugeln 20 und Kalotten 21) der Formschlußverbindung 19 zwischen Kugelstangenlagerkopf 4 sowie Anbauflansch 5 und damit Freigeben der Kugelstange 3 zum Verschwenken in eine andere Drehlage, wird der Sperrbolzen 18 durch Betätigung des z.B. in einem Kofferraum eines Kraftfahrzeugs befestigten Handrad-Auslösemechanismus 16 gegen die Feder 28 (in den Fig. 4 und 5 der Einfachheit halber nicht dargestellt), die sich dabei vorspannt, zurückgestellt; diese zurückgezogene Lage des Sperrbolzens 18 zeigt Fig. 4. Damit einhergehend, wozu auf Fig. 5 verwiesen wird, kommen die Kugeln 23a der hinteren Radialebene I frei, fallen aus der Aufnahme 25a des Lagerringes 24 durch die Radialbohrungen 22a der Hohlwelle 8 nach innen und legen sich dort an die Schrägfläche 30 des rückwärtigen Sperrbolzenkörpers 18a an. Gleichzeitig werden die Kugeln 23b der vorderen Radialebene II von der Schrägfläche 30 des Sperrbolzenkopfes 18b durch die Radialbohrungen 22b in die Aufnahme 25b des Lagerringes 24 nach außen gedrückt. Dort üben sie durch den Kontakt mit der nach vorne, in Abdrückrichtung wirkenden Anlaufschräge 26b der Aufnahme 25b eine Kraft aus, die die Bewegung des Kugelstangenlagerkopfes 4, der sich nämlich in der zurückgezogenen Position des Sperrbolzens 18 (vgl. Fig. 4) aufgrund des Gewichts der Kugelstange 3 schwerkraftbedingt selbsttätig axial von dem Anbauflansch weg bewegt und die Formschlußverbindung 19 der Kugeln 20 bzw. Kalotten 21 aufhebt, unterstützt. Auch bei einer von äußeren Umständen nachteilig beeinflußten Schwergängigkeit des Auslösens bzw. Abdrückens der Kugelstange 3 wird durch das Wirksamwerden der Kugeln 23b der vorderen Radialebene II gewährleistet, daß der Kugelstangenlagerkopf 4 sicher freikommt und in die gewünschte Betriebslage verschwenkt werden kann.

Erst wenn die Kugelstange 3 mit ihrem Kugelstangenlagerkopf 4 auf der Hohlwelle 8 hand- oder motorbetätigt aus der freien Bewegungsposition nach Fig. 5 heraus in eine Drehendlage verschwenkt und der Sperrbolzen 18 durch die Druckfeder 28 beaufschlagt wieder nach vorne bewegt worden ist, liegt wieder der in Fig. 3 gezeigte Verriegelungszustand vor.

## Patentansprüche

1. Anhängekupplung (1) für Kraftfahrzeuge, umfassend eine fahrzeugfest angeordnete, schwenkbar sowie axial verschieblich gelagerte Kugelstange (3), die an ihrem freien Ende eine Kupplungskugel (2) trägt und sowohl in ihrer Ruhelage als auch in ihrer Betriebslage über in Eingriff bringbare Formschlußkonturen (19; 20, 21) einerseits eines Kugelstangenlagerkopfes (4) und andererseits eines diesem gegenüberliegenden Anbauflansches (5) drehfest festlegbar ist, wobei der Kugelstangenlagerkopf (4) mit einer Verriegelung (18) für die Formschlußkonturen (19; 20, 21) sowohl in der Betriebslage als auch in der Ruhelage der Kugelstange (3) ausgebildet ist,
**dadurch gekennzeichnet,**
**daß** die Verriegelung einen gegen ein anstehendes Kraftelement (28) über ein von außen betätigbares Druck- oder Zugmittel (16) zurückstellbaren Sperrbolzen (18) umfaßt, dem in zwei im Abstand parallel voneinander vorgesehenen Radialebenen (I; II) gegenläufig wirkende Rastmittel (23a, 25a, 26a; 23b, 25b, 26b) zugeordnet sind.

2. Anhängekupplung nach Anspruch 1,
**dadurch gekennzeichnet,**
**daß** der Kugelstangenlagerkopf (4) auf einer Hohlwelle (8) angeordnet ist, die den Sperrbolzen (18) zentral aufnimmt.

3. Anhängekupplung nach Anspruch 1 oder 2,
**dadurch gekennzeichnet**
**daß** die Rastmittel als Kugeln (23a; 23b) ausgebildet und in Radialbohrungen (22a; 22b) der Hohlwelle (8) begrenzt ein- und ausrückbar angeordnet sind.

4. Anhängekupplung nach einem der Ansprüche 1 bis 3,
**dadurch gekennzeichnet,**
**daß** das vordere Ende des Sperrbolzens (18) mit einem Einschnürungsabschnitt (18c) ausgebildet ist, der beidendig mit Schrägflächen (30) einerseits in den rückwärtigen Sperrbolzenkörper (18a) und andererseits den Sperrbolzenkopf (18b) übergeht.

5. Anhängekupplung nach einem der Ansprüche 1 bis 4,
**dadurch gekennzeichnet,**
**daß** den Kugeln (23a, 23b) im Kugelstangenlagerkopf (4) mit in den beiden Radialebenen (I; II) gegenläufig ausgerichteten Anlaufschrägen (26a, 26b) ausgebildete Aufnahmen (25a; 25b) zugeordnet sind.

6. Anhängekupplung nach Anspruch 5,
**dadurch gekennzeichnet,**
**daß** die Aufnahmen (25a; 25b) in einem im Kugelstangenlagerkopf (4) befestigten Lagerring (24) vorgesehen sind, mit dem sich der Kugelstangenlagerkopf (4) bei seiner axialen Verschiebung über die Hohlwelle (8) bewegt.

7. Anhängekupplung nach einem der Ansprüche 1 bis 6,
**dadurch gekennzeichnet,**
**daß** der rückwärtige Sperrbolzenkörper (18a) an seinem Umfang mit einer selbsthemmenden Schräge (27) oder einem Hinterschnitt versehen ist.

8. Anhängekupplung nach einem der Ansprüche 1 bis 7,
**dadurch gekennzeichnet,**
**daß** zur Formschlußverbindung (19) von Kugelstangenlagerkopf (4) und Anbauflansch (5) in deren einander gegenüberliegenden Stirnflächen auf gleichen Teilkreisen gleichmäßig verteilt einerseits Kugeln (20) und andererseits Kalotten (21) ausgebildet sind.

9. Anhängekupplung nach einem der Ansprüche 1 bis 8,
**dadurch gekennzeichnet,**
**daß** zwischen dem vom Anbauflansch (5) entfernten Ende der Hohlwelle (8) und einem dort vorgesehenen Verbindungsblech (7) eine Ausgleichsscheibe (6) angeordnet ist.

10. Anhängekupplung nach Anspruch 9,
**dadurch gekennzeichnet,**
**daß** die Kugelstange (3) direkt über den Anbauflansch (5) mit einem am Fahrzeug befestigten Querträger verbunden ist.

11. Anhängekupplung nach Anspruch 9 oder 10,
**dadurch gekennzeichnet,**
**daß** das Verbindungsblech (7) oder der Anbauflansch (5) an einem Mittelteil eines mehrteiligen Querträgers befestigt ist.

12. Anhängekupplung nach einem der Ansprüche 9 bis 11,
**dadurch gekennzeichnet,**
**daß** das Verbindungsblech (7) oder der Anbauflansch (5) mit der Kugelstange (3) außermittig am Querträger befestigt ist.

13. Anhängekupplung nach einem der Ansprüche 1 bis 12,
**gekennzeichnet durch**
einen motorischen Dreh- und Schwenkantrieb der Kugelstange (3).

14. Anhängekupplung nach einem der Ansprüche 1 bis 13,
**dadurch gekennzeichnet,**
**daß** der Kugelstange (3) ein deren Schwenkbewegungen mitmachender Steckdosenhalter zugeordnet ist.

15. Anhängekupplung nach einem der Ansprüche 1 bis 14,
**dadurch gekennzeichnet,**
**daß** zumindest einige ihrer Bauteile aus Leichtmetall gefertigt sind.

16. Anhängekupplung nach einem der Ansprüche 1 bis 15,
**dadurch gekennzeichnet,**
**daß** mechanisch stark belastete und beanspruchte Bereiche der Kupplungs-Bauteile gehärtet sind.

## Claims

1. A trailer coupling (1) for motor vehicles, comprising a coupling ball bar (3) being disposed so as to be fastened to the vehicle in a fixed manner and mounted so as to be pivotal as well as displaceable in the axial direction, said ball bar supporting on its free end a coupling ball (2) and being capable of being fixed in a rotationally rigid manner both in its resting position as well as in its operating position via engageable positive locking contours (19; 20, 21) of a coupling ball bar bearing head (4), on the one hand and, on the other hand, via a mounted flange (5) located opposite said coupling ball bar bearing head (4), wherein said ball bar bearing head (4) is formed with a locking mechanism (18) for said positive locking contours (19; 20, 21) both in the operating position as well as in the resting position of said ball bar (3),
**characterized in**
**that** said locking mechanism comprises a locking pin (18) which can be returned against an available force element (28) being operable from the outside via a pressure or traction means (16), to which locking means (23a, 25a, 26a; 23b, 25b, 26b) acting in the opposite direction in two radial levels (I; II) provided in the spacing parallel to each other are assigned.

2. The trailer coupling according to claim 1,
**characterized in**
**that** said ball bar bearing head (4) is disposed on a hollow shaft (8), which accommodates said locking pin (18) centrally.

3. The trailer coupling according to claim 1 or 2,
**characterized in**
**that** said locking means are formed as balls (23a; 23b) and are disposed in radial bores (22a; 22b) of said hollow shaft in a limited manner engageable and disengageable.

4. The trailer coupling according to one of the claims 1 to 3,
**characterized in**
**that** the front end of said locking pin (18) is formed with a constriction section (18c), which at both ends merges with inclined surfaces (30), on the one hand, in said rearward locking pin body (18a) and, on the other hand, in said locking pin head (18b).

5. The trailer coupling according to one of the claims 1 to 4,
**characterized in**
**that** receptacles (25a; 25b) formed in said ball bar bearing head (4) with run-on slopes (26a, 26b) oriented in the opposite direction are assigned to said balls (23a, 23b) in said two radial planes (I; II) .

6. The trailer coupling according to claim 5,
**characterized in**
**that** said receptacles (25a, 25b) are provided in a bearing ring (24) mounted in said ball bar bearing head (4) with which said ball bar bearing head (4) moves during its axial displacement over said hollow shaft (8).

7. The trailer coupling according to one of the claims 1 to 6,
**characterized in**
**that** said rearward locking pin body (18a) is provided with a self-blocking inclined surface (27) or an undercut on its periphery.

8. The trailer coupling according to one of the claims 1 to 7,
**characterized in**
**that** for the positive locking connection (19) of said ball bar bearing head (4) and said mounting flange (5) in their opposite end faces, evenly distributed balls (20), on the one hand and, on the other hand, calottes (21) are formed on the same pitch circles.

9. The trailer coupling according to one of the claims 1 to 8,
**characterized in**
**that** a compensating disk (6) is arranged between the end of said hollow shaft (8) removed from said mounting flange (5) and a connecting plate (7) provided there.

10. The trailer coupling according to claim 9,
**characterized in**
**that** said ball bar (3) is connected with a crossbeam directly over said mounting flange (5).

11. The trailer coupling according to claim 9 or 10,
**characterized in**
**that** said connecting plate (7) or said mounting flange (5) is attached to a middle section of a multi-sectional crossbeam.

12. The trailer coupling according to one of the claims 9 to 11,
**characterized in**
**that** said connecting plate (7) or said mounting flange (5) is attached with said ball bar (3) eccentrically to the crossbeam.

13. The trailer coupling according to one of the claims 1 to 12,
**characterized by**
a motorized rotary and pivot drive of said ball bar (3).

14. The trailer coupling according to one of the claims 1 to 13,
**characterized in**
**that** an electrical outlet socket holder cooperating with the pivoting movements is assigned to said ball bar (3).

15. The trailer coupling according to one of the claims 1 to 14,
**characterized in**
**that** at least some of its components are manufactured from light metal.

16. The trailer coupling according to one of the claims 1 to 15,
**characterized in**
**that** regions of the coupling components subject to heavy mechanical load and stress are tempered.

## Revendications

1. Attelage de remorque (1) pour véhicules, comprenant une barre à boule (3) disposée de façon solidaire du véhicule et logée de façon basculante et coulissante axialement, qui porte une boule d'attelage (2) sur son extrémité libre et peut être fixée de façon solidaire en rotation aussi bien dans sa position de repos que dans sa position de service par des contours de liaison mécanique par conjugaison de forme (19 ; 20, 21) d'une part d'une tête de palier de barre à boule (4) et d'autre part d'une bride rapportée (5) faisant face à cette tête, la tête de palier de barre à boule (4) étant conçue avec un verrouillage (18) pour les contours de liaison mécanique par conjugaison de forme (19 ; 20, 21) aussi bien dans la position de service que dans la position de repos de la barre à boule (3),
**caractérisé en ce que**
le verrouillage comporte un boulon de blocage (18) pouvant être reculé contre un élément de force (28) appliqué par un moyen de pression ou de traction (16) pouvant être actionné par l'extérieur, boulon auquel sont attribués des moyens d'encliquetage (23a, 25a, 26a ; 23b, 25b, 26b) agissant dans le sens contraire dans deux plans radiaux (I ; II) prévus espacés l'un de l'autre et parallèles entre eux.

2. Attelage de remorque selon la revendication 1,
**caractérisé en ce que**
la tête de palier de barre à boule (4) est disposée sur un arbre creux (8) qui reçoit le boulon de blocage (18) de façon centrale.

3. Attelage de remorque selon la revendication 1 ou 2,
**caractérisé en ce que**
les moyens d'encliquetage sont conçus comme des boules (23a ; 23b) et sont disposés de façon à pouvoir être engagés et désengagés de façon limitée dans des percements radiaux (22a ; 22b) de l'arbre creux (8).

4. Attelage de remorque selon l'une quelconque des revendications 1 à 3,
**caractérisé en ce que**
l'extrémité avant du boulon de blocage (18) est réalisée avec une partie de rétrécissement (18c), qui fait place sur les deux extrémités avec des surfaces inclinées (30) d'une part au corps du boulon de blocage (18a) arrière et d'autre part à la tête du boulon de blocage (18b).

5. Attelage de remorque selon l'une quelconque des revendications 1 à 4,
**caractérisé en ce que**
des logements (25a, 25b) réalisés avec des chanfreins d'entrée (26a, 26b) orientés dans le sens contraire dans les deux plans radiaux (I, II) sont attribués aux boules (23a, 23b) dans la tête du palier de barre à boule (4).

6. Attelage de remorque selon la revendication 5,
**caractérisé en ce que**
les logements (25a ; 25b) sont prévus dans une bague de palier (24) fixée dans la tête du palier de barre à boule (4), bague avec laquelle la tête du palier de barre à boule (4) se déplace lors de son déplacement axial par l'arbre creux (8).

7. Attelage de remorque selon l'une quelconque des revendications 1 à 6,
**caractérisé en ce que**
le corps de boulon de blocage (18a) arrière est doté sur son pourtour d'un chanfrein (27) autobloquant ou d'une contre-dépouille.

8. Attelage de remorque selon l'une quelconque des revendications 1 à 7,
**caractérisé en ce que**,
pour la liaison mécanique par conjugaison de forme (19) de la tête du palier de barre à boule (4) et de la bride rapportée (5), d'une part des boules (20) et d'autre part des calottes (21) sont réalisées de façon uniformément répartie dans leurs surfaces frontales se faisant face de la tête et de la bride sur des cercles partiels identiques.

9. Attelage de remorque selon l'une quelconque des revendications 1 à 8,
**caractérisé en ce que**
un disque d'équilibrage (6) est disposé entre l'extrémité, éloignée de la bride rapportée (5), de l'arbre creux (8) et une tôle de liaison (7) prévue à cet endroit.

10. Attelage de remorque selon la revendication 9,
**caractérisé en ce que**
la barre à boule (3) est reliée directement par la bride rapportée (5) à une traverse fixée sur le véhicule.

11. Attelage de remorque selon la revendication 9 ou 10,
**caractérisé en ce que**
la tôle de liaison (7) ou la bride rapportée (5) est fixée sur une partie centrale d'une traverse en plusieurs parties.

12. Attelage de remorque selon l'une quelconque des revendications 9 à 11,
**caractérisé en ce que**
la tôle de liaison (7) ou la bride rapportée (5) est fixée avec la barre à boule (3) de façon excentrée sur la traverse.

13. Attelage de remorque selon l'une quelconque des revendications 1 à 12,
**caractérisé par**
un entraînement de rotation et de basculement par moteur de la barre à boule (3).

14. Attelage de remorque selon l'une quelconque des revendications 1 à 13,
**caractérisé en ce que**
à la barre à boule (3) est attribué un support de prise qui effectue également ses mouvements de basculement.

15. Attelage de remorque selon l'une quelconque des revendications 1 à 14
**caractérisé en ce que**
au moins certains de ses composants sont fabriqués en métal léger.

16. Attelage de remorque selon l'une quelconque des revendications 1 à 15,
**caractérisé en ce que**
des zones très chargées et sollicitées au plan mécanique des composants d'accouplement sont trempées.
